# EUROPEAN PATENT SPECIFICATION

(11) **EP 4 224 623 B1**
(45) Date of publication and mention of the grant of the patent: **22.10.2025**
(21) Application number: 23155443.7
(22) Date of filing: 07.02.2023
(51) Int. Cl.: H01M 50/645, H01M 50/147, H01M 50/55, H01M 50/627

(54) **CYLINDRICAL SECONDARY BATTERY**
ZYLINDRISCHE SEKUNDÄRBATTERIE
BATTERIE SECONDAIRE CYLINDRIQUE

(30) Priority: 07.02.2022 KR 20220015468
(43) Date of publication of application: 09.08.2023
(73) Proprietor: Samsung SDI Co., Ltd., Yongin-si, Gyeonggi-do 17084 (KR)
(72) Inventor: JUNG, Hyun Ki, 17084 Yongin-si (KR)
(74) Representative: Marks & Clerk LLP

(56) References cited:
- WO-A1-2014/072127
- CN-A- 113 793 974
- US-A1- 2004 023 107
- US-A1- 2011 171 508
- US-B2- 8 197 963

## Description

### BACKGROUND

### 1. Field

An embodiment of the present disclosure relates to a cylindrical secondary battery in which a positive electrode and a negative electrode are formed in one direction.

### 2. Description of the Related Art

In general, a cylindrical secondary battery includes a cylindrical electrode assembly, a cylindrical case for accommodating the electrode assembly and an electrolyte, and a cap assembly coupled to an upper opening of the case to seal the case and allowing the current generated from the electrode assembly to flow to an external device.

The cylindrical secondary battery has a structure in which a case having a negative electrode and a cap assembly having a positive electrode are insulated from each other by means of a gasket, and the negative electrode is generally disposed below the battery. However, both the negative electrode and the positive electrode should be provided on one side as necessary, and thus it is necessary to develop a new structure of a terminal connection structure.

The above information disclosed in this Background section is only for enhancement of understanding of the background of the invention and therefore it may contain information that does not constitute prior art.

US 8197963 B2 describes a lithium ion secondary battery including an electrode assembly having a first electrode plate, a second electrode plate, and a separator interposed therebetween; a case in which the electrode assembly is received; a cap plate formed with a terminal hole and an electrolyte injection hole; and a washer installed at an upper portion of the cap plate, the washer having at least one transparent part formed thereon or having a transparent part formed on an entire surface thereof.

WO 2014072127 A1 describes a battery cell, in particular a lithium-ion battery cell, in which a coil element, two current collectors and electrolyte are accommodated in a housing. The housing comprises a container and a cover arrangement. The cover arrangement comprises, inter alia, a cover plate which is fixedly connected to the container once internal components of the battery cell have been introduced. A filling opening is provided in the cover plate, through which filling opening electrolyte can be introduced into the interior of the housing and which is closed by means of a rivet.

CN 113793974 A describes a rivet-pulling sealing method for a lithium battery liquid injection seal. The method comprises: fixing a single battery of which a battery liquid injection hole needs to be sealed in advance, wherein the battery liquid injection hole is formed in the top of the single battery; horizontally putting a sealing ring into the battery liquid injection seal; vertically installing the rivet rod of a rivet on a hand riveter, and clamping; enabling a rivet head on the lower portion of the rivet to vertically penetrate through the inner ring through hole of the sealing ring, and then inserting the rivet head into the battery liquid injection hole to make the bottom face of a locking ring of the rivet in contact with the top face of the sealing ring; and operating the hand riveter, so as to make the nail head fix the battery liquid injection hole, and make the sealing ring seal the battery liquid injection hole.

US 20110171508 A1 describes a secondary battery including an electrode assembly formed by stacking and winding two different electrodes and a separator disposed between the electrodes, a can accommodating the electrode assembly, a cap assembly coupled to an upper portion of the can accommodating the electrode assembly, a gasket compressed between the cap assembly and the upper portion of the can, and an auxiliary sealing member disposed inside the gasket.

US 20040023107 A1 describes a battery including an electrode unit housed in a battery can and which generates electricity which can be taken out of the battery via a pair of negative and positive electrode terminals, wherein a terminal assembly is installed in the battery, a current collector plate is connected to an edge of an electrode of the electrode unit for connecting the electrode unit to the terminal assembly, and one or more than one connecting piece which is protrusively formed on a surface of the current collector plate is welded and secured to a base portion of the terminal assembly.

### SUMMARY

A secondary battery according to the present disclosure is as defined in claim 1.

The injection plug may include a cylindrical body with an empty interior, a pressing part disposed at one end of the body, and a cylindrical separating part disposed at the other end of the body and connected to the pressing part inside the body.

In the injection plug, the body and the pressing part may be disposed inside the cap plate through the injection hole, and the separating part may be disposed outside the cap plate.

The outer diameter of the pressing part may be formed larger than the inner diameter of the body.

When the separating part is pulled out of the cap plate, the pressing part may be inserted into the body to increase the outer diameter of the body.

The body may be made of a material having an elongation capable of inserting (e.g. receiving) the pressing part.

The body may be disposed perpendicular to the longitudinal direction at an end facing the outside of the cap plate and may have a disk shape having a diameter greater than that of the body.

The injection plug may consist of a blind rivet.

The cap plate may be insulated from the case.

The case may further include a terminal coupled to a surface opposite to the cap plate and insulated from the case, and the terminal may be electrically connected to one of the current collector plates.

At least some of the above and other features of the invention are set out in the claims.

According to an embodiment of the present disclosure, an electrolyte injection structure may be improved, and thus process efficiency may be improved. In addition, since both the positive electrode and the negative electrode are formed in one direction of the secondary battery, a connection structure with an external terminal may be simplified.

### BRIEF DESCRIPTION OF DRAWINGS

FIG. 1 is a perspective view showing a cylindrical secondary battery according to an embodiment of the present disclosure.
FIG. 2 is a cross-sectional view of the cylindrical secondary battery of FIG. 1.
FIG. 3A is a schematic diagram schematically showing an initial stage of a cap assembly assembling process according to FIGS. 1 and 2.
FIG. 3B is a schematic diagram schematically showing a later stage of a cap assembly assembling process according to FIGS. 1 and 2.
FIG. 4 is a perspective view schematically showing an injection plug and a mounting tool according to an embodiment of the present disclosure.
FIGS. 5A to 5C are schematic diagrams briefly showing an injection plug mounting process according to an embodiment of the present disclosure.

### DETAILED DESCRIPTION

Examples of the present invention are provided to more completely explain the present invention to those skilled in the art, and the following examples may be modified in various other forms. The present invention is defined in the claims and may be embodied in many different forms and should not be construed as being limited to the example embodiments set forth herein. Rather, these example embodiments are provided so that this disclosure will be thorough and complete and will convey the aspects and features of the present invention to those skilled in the art.

In addition, in the accompanying drawings, sizes or thicknesses of various components are exaggerated for brevity and clarity. Like numbers refer to like elements throughout. As used herein, the term "and/or" includes any and all combinations of one or more of the associated listed items. In addition, it will be understood that when an element A is referred to as being "connected to" an element B, the element A can be directly connected to the element B or an intervening element C may be present therebetween such that the element A and the element B are indirectly connected to each other.

The terminology used herein is for the purpose of describing particular embodiments only and is not intended to be limiting of the disclosure. As used herein, the singular forms are intended to include the plural forms as well, unless the context clearly indicates otherwise. It will be further understood that the terms "comprise or include" and/or "comprising or including," when used in this specification, specify the presence of stated features, numbers, steps, operations, elements, and/or components, but do not preclude the presence or addition of one or more other features, numbers, steps, operations, elements, components, and/or groups thereof.

It will be understood that, although the terms first, second, etc. may be used herein to describe various members, elements, regions, layers and/or sections, these members, elements, regions, layers and/or sections should not be limited by these terms. These terms are only used to distinguish one member, element, region, layer and/or section from another. Thus, for example, a first member, a first element, a first region, a first layer and/or a first section discussed below could be termed a second member, a second element, a second region, a second layer and/or a second section without departing from the teachings of the present invention.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the element or feature in the figures is turned over, elements described as "below" or "beneath" other elements or features would then be oriented "on" or "above" the other elements or features. Thus, the term "below" can encompass both an orientation of above and below.

Hereinafter, a cylindrical secondary battery according to an embodiment of the present disclosure will be described in detail with reference to the accompanying drawings.

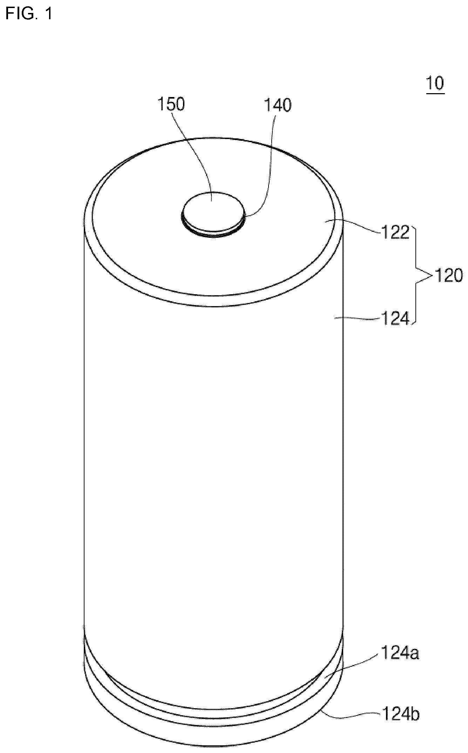

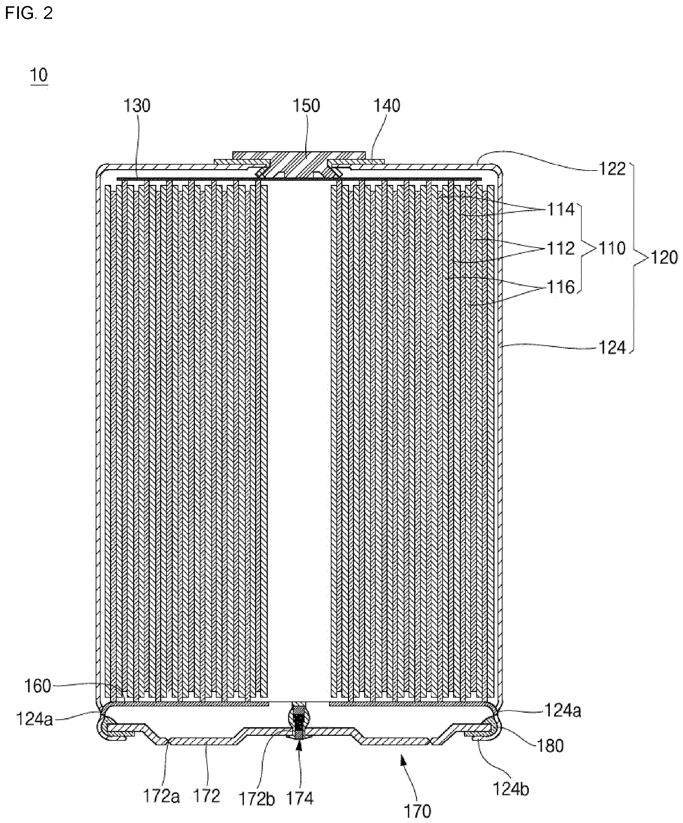

FIG. 1 is a perspective view showing a cylindrical secondary battery according to an embodiment of the present disclosure. FIG. 2 is a cross-sectional view of the cylindrical secondary battery of FIG. 1.

As shown in FIGS. 1 and 2, the secondary battery 10 according to an embodiment of the present disclosure may include an electrode assembly 110, a case 120, a first current collector plate 130, a first gasket 140, a positive electrode terminal 150, a second current collector plate 160, and a cap assembly 170.

As shown in FIG. 2, the electrode assembly 110 may include a first electrode plate 112, a second electrode plate 114, and a separator 116.

The first electrode plate 112 may be any one of a negative electrode plate and a positive electrode plate. For example, the first electrode plate may be a positive electrode plate. The first electrode plate 112, which is a positive electrode plate, may be formed of a metal thin plate having excellent conductivity, for example, aluminium foil or mesh. The first electrode plate 112 may include a positive electrode coated portion that is coated with a positive electrode active material and a positive electrode uncoated portion that is not coated with a positive electrode active material. For example, the positive electrode active material may be formed of a chalcogenide compound, for example, a composite metal oxide such as LiCoO₂, LiMn₂O₄, LiNiO₂, LiNiMnO₂, or the like.

The second electrode plate 114 may be the other of a negative electrode plate and a positive electrode plate. For example, if the first electrode plate 112 is a positive electrode plate, the second electrode plate 114 is a negative electrode plate. The second electrode plate 114, which is a negative electrode plate, may be made of a thin conductive metal plate, for example, copper or nickel foil or mesh.

The second electrode plate 114 may include a negative electrode coated portion that is coated with an anode active material and a negative electrode uncoated portion that is not coated with an anode active material. For example, the negative electrode active material may be formed of a carbon-based material, Si, Sn, tin oxide, a tin alloy composite, a transition metal oxide, lithium metal nitrite, or a metal oxide.

The separator 116 is interposed between the first electrode plate 112 and the second electrode plate 114 to prevent a short circuit between the first electrode plate 112 and the second electrode plate 114. For example, the separator 116 may be made of polyethylene, polypropylene, a porous copolymer of polyethylene and polypropylene, or the like.

For example, in the electrode assembly 110, the uncoated portion of the first electrode plate 112 is disposed to protrude upward from the top end of the second electrode plate 114, and the uncoated portion of the second electrode plate 114 may be disposed to protrude lower than the lower end of the first electrode plate 112 to be wound in a jelly-roll shape.

As shown in FIG. 2, the case 120 may be formed in a cylindrical shape with one surface open to accommodate the electrode assembly 110 and the other surface closed. While FIG. 2 illustrates that the lower surface is open and the upper surface is closed, as necessary, the upper surface may be opened and the lower surface may be closed. In addition, the case 120 having the lower surface opened, of FIG. 2, may be turned over and used to be disposed so as to make the opened portion face upward. Therefore, in the present embodiment, it is specified that the upper surface, the lower surface, and the up-down direction are just terms defined on the basis of FIGS. 1 and 2 but are not terms defined according to the absolute direction.

The case 120 may include a circular upper surface portion 122 and a side portion 124 extending downward from the upper surface portion 122. A curling part 124a and a crimping part 124b may be formed below the side portion 124.

The curling part 124a is an inwardly concavely processed part in an approximately semicircular shape from the outside of the side part 124. The curling part 124a is different from a beading part formed in a general cylindrical secondary battery in that the former is deformed to a smaller size than the latter. The curling part 124a serves to fix the second current collector plate 160, which will be described later, and to support the cap assembly 170 when assembling the cap assembly 170. The crimping part 124b is formed by bending the lower end of the side portion 124 in the inner direction of the case 120. The crimping part 124b serves to fix the cap assembly 170 so as not to be separated to the outside of the case 120. The first current collector plate 130 is provided between the upper surface portion 122 and the electrode assembly 110, and the second current collector plate 160 is provided between the cap assembly 170 and the electrode assembly 110.

As shown in FIG. 2, the first current collector plate 130 is disposed between the upper surface portion 122 and the uncoated portion of the first electrode plate 112. The first current collector plate 130 may be in contact with the first electrode plate 112 serving as a positive electrode plate to be electrically connected. In addition, the first current collector plate 130 is electrically connected to the positive electrode terminal 150 installed on the upper surface portion 122. The first gasket 140 may be provided between the first current collector plate 130 and the positive electrode terminal 150. The second current collector plate 160 is disposed between the cap assembly 170 and the uncoated portion of the second electrode plate 114. The second current collector plate 160 may be in contact with the second electrode plate 114 serving as a negative electrode plate to be electrically connected. In addition, the second current collector plate 160 may have an edge in contact with the side portion 124 to be electrically connected. The cap assembly 170 may be disposed under the second current collector plate 160.

As shown in FIG. 2, the first gasket 140 is inserted between the positive electrode terminal 150 and the upper surface portion 122 to insulate the upper surface portion 122 and the positive electrode terminal 150 from each other.

As shown in FIGS. 1 and 2, the positive electrode terminal 150 is partially exposed to the outside of the upper surface portion 122 and is electrically connected to the first current collector plate 130. For example, the positive terminal 150 may be a rivet-type terminal.

As shown in FIG. 2, the cap assembly 170 is coupled to the open lower portion of the case 120 to close the case 120. The cap assembly 170 may include a cap plate 172 and an injection plug 174 coupled to the cap plate 172.

The cap plate 172 is a substantially disk-shaped plate, and may be coupled to the side portion 124 by means of a second gasket 180. The cap plate 172 may be fixed to the case 120 by the curling part 124a and the crimping part 124b, which will later be described. Since the second gasket 180 is disposed between the cap plate 172 and the side portion 124, the cap plate 172 is insulated from the case 120. In addition, since the case 120 is a negative electrode and the positive terminal 150 is disposed on the case 120, both the positive electrode and the negative electrode of the secondary battery 10 may be configured to be disposed on the secondary battery 10. In addition, a notch 172a serving as a safety vent for discharging gas may be formed on the plate surface of the cap plate 172. For example, the edge and central regions of the cap plate 172 may be formed to be closer to the second current collector plate 160 than the region where the notch 172a is formed. An injection port 172b for injection of electrolyte may be formed through the central region of the cap plate 172. The injection port 172b may be formed in a substantially circular shape. After completion of the injection, the injection plug 174 may be inserted into the injection port 172b.

For example, the injection plug 174 may be provided as a blind rivet. Hereinafter, the shape and installation process of the injection plug 174 will be described in more detail.

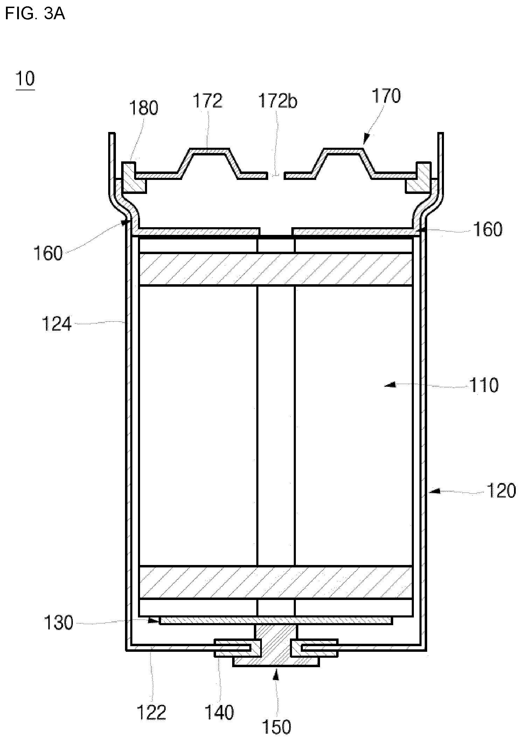

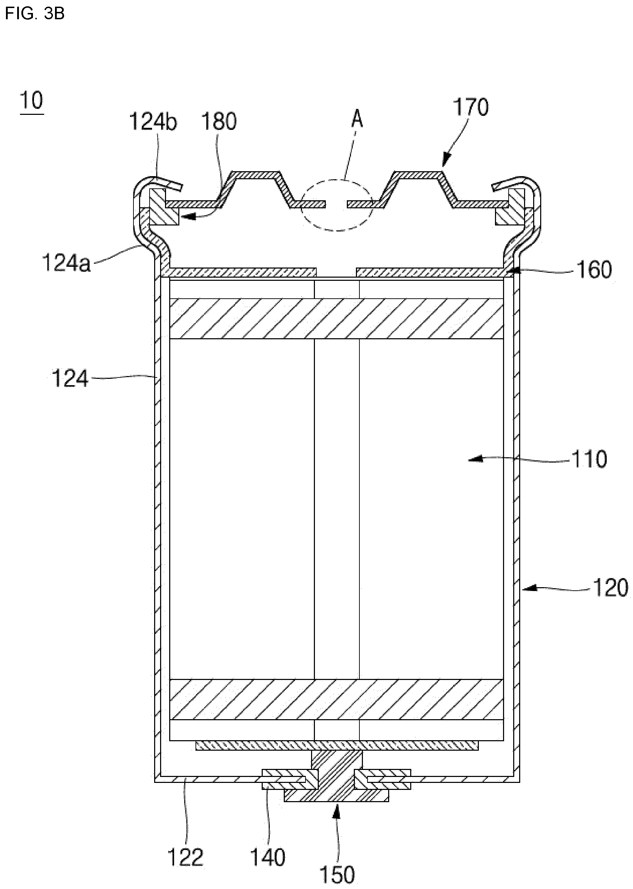

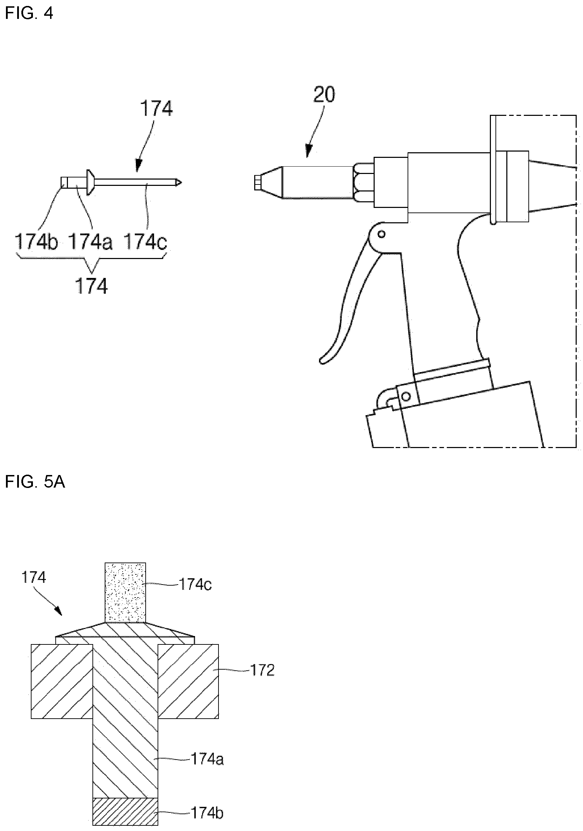

FIG. 3A is a schematic diagram schematically showing an initial stage of a cap assembly assembling process according to FIGS. 1 and 2. FIG. 3B is a schematic diagram schematically showing a later stage of a cap assembly assembling process according to FIGS. 1 and 2. FIG. 4 is a perspective view schematically showing an injection plug and a mounting tool according to an embodiment of the present disclosure. FIGS. 5A to 5C are schematic diagrams briefly showing an injection plug mounting process according to an embodiment of the present disclosure.

As shown in FIG. 3A, the first gasket 140 and the positive electrode terminal 150 may be installed on the upper surface portion 122 of the case 120 during the assembling process of the secondary battery 10. Then, the first current collector plate 130 and the electrode assembly 110 may be electrically connected and then stored in the case 120. Thereafter, the case 120 may be turned over and disposed so that the upper surface portion 122 faces downward, and the second current collector plate 160 may then be electrically connected to the electrode assembly 110. Thereafter, the curling part 124a may be formed, and the second gasket 180 and the cap plate 172 may then be disposed. Accordingly, the injection port 172b formed on the cap plate 172 is positioned above the case 120.

As shown in FIG. 3B, after seating the cap plate 172 on the case 120, the end of the side portion 124 may be bent to form the crimping part 124b, thereby fixing the cap plate 172 to the case 120. Thereafter, an electrolyte may be injected through the injection port 172b, and the injection plug 174 may be installed to close the injection port 172b.

As shown in FIGS. 4 to 5C, the injection plug 174 may be fixed on the cap plate 172 by using a separate mounting mechanism 20. The injection plug 174 may include a body 174a, a pressing part 174b, and a separating part 174c for being fixed to the mounting mechanism 20. As described above, the injection plug 174 may be a blind rivet.

The body 174a has a substantially cylindrical shape with an empty interior. The pressing part 174b is disposed on one end of the body 174a toward the inside of the case 120. The other end of the body 174a facing the outside of the case 120 extends in a substantially circular plate shape. The circular portion of the body 174a has a larger diameter than the other portions of the body 174a and is disposed perpendicular to the longitudinal direction of the other portions of the body 174a. Therefore, as shown in FIG. 5A, the cross-section of the body 174a has an approximately English capital letter "T" shape. The approximately circular portion of the body 174a is exposed in the same shape as the head of a bolt when viewed from the outside of the case 120. The separating part 174c is formed at the other end of the body 174a, and has a structure in which the pressing part 174b and the separating part 174c are connected inside the body 174a. When the pressing part 174b is pulled while the separating part 174c is pulled by the mounting mechanism 20, the body 174a has a cylindrical shape with an empty interior to accommodate the pressing part 174b. In addition, the body 174a may be made of a material having a predetermined elasticity to accommodate the pressing part 174b. Here, 'elasticity' does not mean elasticity such as rubber or silicone, but should be understood to mean that it has an elongation rate capable of causing deformation to the extent that the pressing part 174b can be pressfitted. For example, the body 174a may be made of aluminium or a metal material having an elongation similar thereto.

The pressing part 174b is provided at one end of the body 174a, and may be formed in a cylindrical shape or a hemispherical shape. The pressing part 174b may have a shorter length than that of the body 174a and may have the same outer diameter as the body 174a. Although the outer diameter of the pressing part 174b may be slightly smaller than the outer diameter of the body 174a, at least the outer diameter of the pressing part 174b may be formed to be larger than the inner diameter of the body 174a. The pressing part 174b is connected to the separating part 174c in the interior of the body 174a.

The separating part 174c is in a substantially cylindrical shape, and has one end inserted into the body 174a to be integrally formed with the pressing part 174b and the other end exposed toward the other end of the body 174a. Therefore, the diameter of the separating part 174c is smaller than the diameter of the body 174a, and the length of the separating part 174c is longer than the length of the body 174a. The separating part 174c is inserted into and fixed in the mounting mechanism 20, and serves to pull the pressing part 174b toward the mounting mechanism 20. The separating part 174c may be separated and removed from the pressing part 174b after the injection plug 174 is mounted.

The injection plug 174 having the above-described structure is inserted into the injection port 172b formed in the cap plate 172 through the body 174a and the pressing part 174b, as shown in FIG. 5A. The pressing part 174b is disposed toward the inside of the case 120. Since the injection port 172b needs to be sealed by the injection plug 174, the diameter of the cylindrical portion of the body 174a may be formed to correspond to the inner diameter of the injection port 172b.

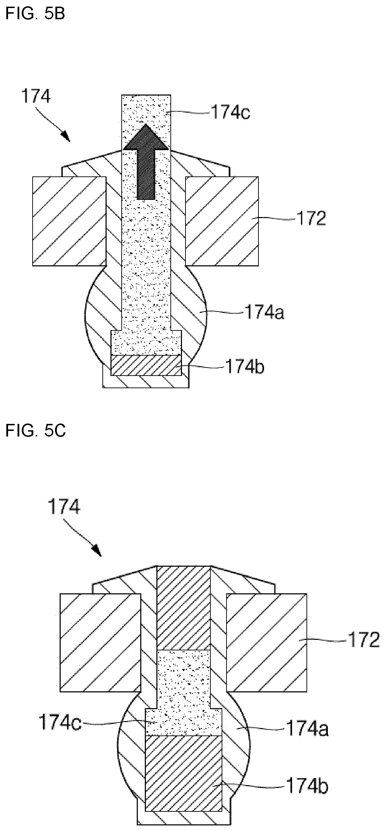

After the separating part 174c is mounted on the mounting mechanism 20 and fixed, when the case 120 is pulled outward (in the arrow direction shown in FIG. 5B), the pressing part 174b connected to the separating part 174c is pulled together. Since the outer diameter of the pressing part 174b is larger than the inner diameter of the body 174a, the body 174a is deformed while the pressing part 174b is pulled inward of the body 174a, and the diameter may increase as shown in FIG. 5B.

Since the inner diameter of the pressing part 174b is larger than the inner diameter of the body 174a, even when being pulled, the pressing part 174b may be caught on the cap plate 172, as shown in FIG. 5C, rather than being pulled to the outside of the injection port 172b. In this state, the separating part 174c is cut by the mounting mechanism 20, and the pressing part 174b is fixed while being inserted into the body 174a. Accordingly, the injection port 172b may be maintained in a sealed state by means of the injection plug 174.

As described above, according to an embodiment of the present disclosure, since both the positive electrode and the negative electrode are formed in one direction of the secondary battery, a connection structure with an external terminal may be simplified.

In addition, an electrolyte injection structure may be improved, and thus process efficiency may be improved.

While the foregoing embodiment is only one embodiment for carrying out the present disclosure, which is not limited to the embodiment, it will be understood by a person skilled in the art that various changes in form and details may be made therein without departing from the scope of the present disclosure as defined by the following claims.

## Claims

1. A secondary battery comprising:
an electrode assembly (110) being cylindrical in shape and comprising a positive electrode plate (112) and a negative electrode plate (114);
a case (120) being cylindrical in shape and accommodating the electrode assembly (110), one side of the case (120) being open;
a first current collector plate (130) and a second current collector plate (160), each of the first and second current collector plates (130, 160) being electrically connected to one of the electrode assembly (110) or the case (120); and
a cap assembly (170) comprising a cap plate (172) sealing the case, the cap plate (172) having an injection port (172b) extending therethrough and an injection plug (174) sealing the injection port (172b); wherein the injection plug (174) has a cylindrical body (174a) with an empty interior, a pressing part (174b) at one end of the body (174a), and a cylindrical separating part (174c) at another end of the body (174a) and connected to the pressing part (174b) through the interior of the body (174a); and
further comprising a positive electrode terminal (150) coupled to a surface of the case (120) opposite to the cap plate (172) and insulated from the case (120);
wherein the positive electrode terminal (150) is electrically connected to the positive electrode plate (112); and
wherein the cap plate (172) is at one end of the case (120) and the case (120) is electrically connected to the negative electrode plate (114).

2. The secondary battery of claim 1, wherein, in the injection plug (174), the body and the pressing part (174a, 174b) are inside the injection port (172b) in the cap plate (172) and the separating part (174c) is outside the cap plate (172).

3. The secondary battery of claim 2, wherein an outer diameter of the pressing part (174b) is larger than an inner diameter of the body (174a).

4. The secondary battery of claim 3, wherein the separating part (174c) connected to the pressing part (174b) such that, when the separating part (174c) is pulled away from the cap plate (172), the pressing part moves into the body (174a) and increases the outer diameter of the body (174a).

5. The secondary battery of claim 4, wherein the body (174a) comprises a material having an elongation suitable to receive the pressing part (174b).

6. The secondary battery of claim 5, wherein the body (174a) has a circular portion that extends perpendicular to a longitudinal direction of the body (174a) and is at an end of the body (174a) facing outside the cap plate (172), and
wherein the circular portion has a diameter greater than that of the body (174a).

7. The secondary battery of claim 1, wherein the injection plug (174) is a blind rivet.

8. The secondary battery of any one of claims 1 to 7, wherein the cap plate (172) is insulated from the case (120).

9. The secondary battery of claim 8, further comprising a terminal (150) coupled to a surface of the case (120) opposite to the cap plate (172) and insulated from the case (120),
wherein the terminal (150) is electrically connected to the first current collector plate (130) or to the second current collector plate (160).

## Patentansprüche

1. Sekundärbatterie, umfassend:
eine Elektrodenanordnung (110), welche eine zylindrische Form aufweist und eine positive Elektrodenplatte (112) und eine negative Elektrodenplatte (114) umfasst;
ein Gehäuse (120), welches eine zylindrische Form aufweist und die Elektrodenanordnung (110) aufnimmt, wobei eine Seite des Gehäuses (120) offen ist;
eine erste Stromabnehmerplatte (130) und eine zweite Stromabnehmerplatte (160), wobei jede der ersten und zweiten Stromabnehmerplatte (130, 160) mit einem von der Elektrodenanordnung (110) oder dem Gehäuse (120) elektrisch verbunden ist; und
eine Kappenanordnung (170), welche eine Kappenplatte (172) umfasst, welche das Gehäuse abdichtet, wobei die Kappenplatte (172) eine sich durch sie hindurch erstreckende Injektionsöffnung (172b) und einen Injektionsstopfen (174) aufweist, welcher die Injektionsöffnung (172b) abdichtet; wobei der Injektionsstopfen (174) einen zylindrischen Körper (174a) mit einem leeren Innenraum, ein Druckteil (174b) an einem Ende des Körpers (174a) und ein zylindrisches Trennteil (174c) an einem anderen Ende des Körpers (174a) aufweist und durch das Innere des Körpers (174a) mit dem Druckteil (174b) verbunden ist; und
weiter einen positiven Elektrodenanschluss (150) umfassend, welcher mit einer Oberfläche des Gehäuses (120) gegenüber der Kappenplatte (172) verbunden und von dem Gehäuse (120) isoliert ist;
wobei der positive Elektrodenanschluss (150) mit der positiven Elektrodenplatte (112) elektrisch verbunden ist; und
wobei sich die Kappenplatte (172) an einem Ende des Gehäuses (120) befindet und das Gehäuse (120) mit der negativen Elektrodenplatte (114) elektrisch verbunden ist.

2. Sekundärbatterie nach Anspruch 1, wobei sich in dem Injektionsstopfen (174) der Körper und das Druckteil (174a, 174b) innerhalb der Injektionsöffnung (172b) in der Kappenplatte (172) befinden und sich das Trennteil (174c) außerhalb der Kappenplatte (172) befindet.

3. Sekundärbatterie nach Anspruch 2, wobei ein Außendurchmesser des Druckteils (174b) größer ist als ein Innendurchmesser des Körpers (174a).

4. Sekundärbatterie nach Anspruch 3, wobei das Trennteil (174c) mit dem Druckteil (174b) verbunden ist, sodass, wenn das Trennteil (174c) von der Kappenplatte (172) weggezogen wird, sich das Druckteil in den Körper (174a) hinein bewegt und den Außendurchmesser des Körpers (174a) vergrößert.

5. Sekundärbatterie nach Anspruch 4, wobei der Körper (174a) ein Material umfasst, welches eine Dehnung aufweist, welche zur Aufnahme des Druckteils (174b) geeignet ist.

6. Sekundärbatterie nach Anspruch 5, wobei der Körper (174a) einen kreisförmigen Abschnitt aufweist, welcher sich senkrecht zu einer Längsrichtung des Körpers (174a) erstreckt und sich an einem Ende des Körpers (174a) befindet, welches von der Kappenplatte (172) nach außen zeigt, und
wobei der kreisförmige Abschnitt einen größeren Durchmesser als der Körper (174a) aufweist.

7. Sekundärbatterie nach Anspruch 1, wobei der Injektionsstopfen (174) eine Blindniete ist.

8. Sekundärbatterie nach einem der Ansprüche 1 bis , wobei die Kappenplatte (172) von dem Gehäuse (120) isoliert ist.

9. Sekundärbatterie nach Anspruch 8, weiter einen Anschluss (150) umfassend, welcher mit einer Oberfläche des Gehäuses (120) gegenüber der Kappenplatte (172) verbunden und von dem Gehäuse (120) isoliert ist,
wobei der Anschluss (150) mit der ersten Stromabnehmerplatte (130) oder mit der zweiten Stromabnehmerplatte (160) elektrisch verbunden ist.

## Revendications

1. Batterie rechargeable comprenant :
un ensemble électrode (110) qui est de forme cylindrique et comprenant une plaque d'électrode positive (112) et une plaque d'électrode négative (114) ;
un boîtier (120) qui est de forme cylindrique et logeant l'ensemble électrode (110), un côté du boîtier (120) étant ouvert ;
une première plaque collectrice de courant (130) et une seconde plaque collectrice de courant (160), chacune des première et seconde plaques collectrices de courant (130, 160) étant raccordée électriquement à l'un de l'ensemble électrode (110) ou du boîtier (120) ; et
un ensemble capuchon (170) comprenant une plaque de capuchon (172) fermant le boîtier, la plaque de capuchon (172) présentant un orifice d'injection (172b) s'étendant à travers celui-ci et un bouchon d'injection (174) scellant l'orifice d'injection (172b) ; dans lequel le bouchon d'injection (174) présente un corps cylindrique (174a) avec un intérieur vide, une partie de pression (174b) à une extrémité du corps (174a) et une partie de séparation cylindrique (174c) à l'autre extrémité du corps (174a) et reliée à la partie de pression (174b) par l'intérieur du corps (174a) ; et
comprenant en outre une borne d'électrode positive (150) couplée à une surface du boîtier (120) opposée à la plaque de capuchon (172) et isolée du boîtier (120) ;
dans laquelle la borne d'électrode positive (150) est raccordée électriquement à la plaque d'électrode positive (112) ; et
dans laquelle la plaque de capuchon (172) se trouve à une extrémité du boîtier (120) et le boîtier (120) est raccordé électriquement à la plaque d'électrode négative (114).

2. Batterie rechargeable selon la revendication 1, dans laquelle, dans le bouchon d'injection (174), le corps et la partie de pression (174a, 174b) sont à l'intérieur de l'orifice d'injection (172b) dans la plaque de capuchon (172) et la partie de séparation (174c) est à l'extérieur de la plaque de capuchon (172).

3. Batterie rechargeable selon la revendication 2, dans laquelle un diamètre externe de la partie de pression (174b) est plus grand qu'un diamètre interne du corps (174a).

4. Batterie rechargeable selon la revendication 3, dans laquelle la partie de séparation (174c) est reliée à la partie de pression (174b) de telle sorte que, lorsque la partie de séparation (174c) est retirée de la plaque de capuchon (172), la partie de pression se déplace dans le corps (174a) et augmente le diamètre externe du corps (174a).

5. Batterie rechargeable selon la revendication 4, dans laquelle le corps (174a) comprend un matériau présentant un allongement approprié pour recevoir la partie de pression (174b).

6. Batterie rechargeable selon la revendication 5, dans laquelle le corps (174a) présente une partie circulaire qui s'étend perpendiculairement à une direction longitudinale du corps (174a) et se trouve à une extrémité du corps (174a) tournée vers l'extérieur de la plaque de capuchon (172), et
dans laquelle la partie circulaire présente un diamètre plus grand que celui du corps (174a).

7. Batterie rechargeable selon la revendication 1, dans laquelle le bouchon d'injection (174) est un rivet aveugle.

8. Batterie rechargeable selon l'une quelconque des revendications 1 à 7, dans laquelle la plaque de capuchon (172) est isolée du boîtier (120).

9. Batterie rechargeable selon la revendication 8, comprenant en outre une borne (150) couplée à une surface du boîtier (120) opposée à la plaque de capuchon (172) et isolée du boîtier (120),
dans laquelle la borne (150) est raccordée électriquement à la première plaque collectrice de courant (130) ou à la seconde plaque collectrice de courant (160).
